## Europäisches Patentamt

## European Patent Office

## Office européen des brevets

(19)

(11) Veröffentlichungsnummer : **0 423 162 B1**

(12) # EUROPÄISCHE PATENTSCHRIFT

(45) Veröffentlichungstag der Patentschrift :
26.08.92 Patentblatt 92/35

(51) Int. Cl.$^5$ : **G01C 15/00**

(21) Anmeldenummer : **89907140.1**

(22) Anmeldetag : **20.06.89**

(86) Internationale Anmeldenummer :
**PCT/EP89/00691**

(87) Internationale Veröffentlichungsnummer :
**WO 90/00719 25.01.90 Gazette 90/03**

(54) **VERMESSUNGSSYSTEM MIT EINER ELEKTROOPTISCHEN TOTALSTATION UND EINER MOBILEN EMPFANGSSTATION EINES SATELLITEN-POSITIONSMESS-SYSTEMS.**

(30) Priorität : **06.07.88 CH 2570/88**

(43) Veröffentlichungstag der Anmeldung :
**24.04.91 Patentblatt 91/17**

(45) Bekanntmachung des Hinweises auf die
Patenterteilung :
**26.08.92 Patentblatt 92/35**

(84) Benannte Vertragsstaaten :
**AT CH DE FR GB IT LI NL SE**

(56) Entgegenhaltungen :
Microwave Journal, vol. 29, No. 4, April 1986,
(Dedham, Massachusetts, US), M.R. Stiglitz:
"The global positioning system" pages 34-36,
38, 42, 44, 46, 50, 52, 54, 56-59
Hewlett-Packard Journal, vol. 31, No. 9, September 1980 (Palo Alto, California, US), A.F.
Gort: "A fully integrated, microprocessor-controlled total station", pages 3-11

(73) Patentinhaber : **Leica Heerbrugg AG
CH-9435 Heerbrugg (CH)**

(72) Erfinder : **INGENSAND, Hilmar
Zehntfeldstrasse 21
CH-9443 Widnau (CH)**
Erfinder : **FREI, Erwin
Augiessenstrasse 14b
CH-9443 Widnau (CH)**
Erfinder : **SCHERRER, René
Bruggwaldstrasse 60
CH-9008 St. Gallen (CH)**

(74) Vertreter : **Stamer, Harald, Dipl.-Phys.
c/o Wild Leitz GmbH Konzernstelle Patente
und Marken Ernst-Leitz-Strasse 30 Postfach
20 20
W-6330 Wetzlar (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein terrestrisches Vermessungssystem mit einer elektrooptischen Totalstation zur kombinierten Winkel- und Distanzmessung und einer Datenübertragungsschnittstelle an der Totalstation, welche zu Datenspeicher- bzw. Datenverarbeitungseinrichtungen führt, die dies im Oberbegriff des Patentanspruchs 1 definiert ist. Eine Totalstation wird auch als elektronisches Tachymeter bezeichnet. Die Winkelmessung bezieht sich sowohl auf Horizontal- als auch Vertikalwinkel.

Ein solches Vermessungssystem ist aus dem Dokument Hewlett-Packard Journal, Band 31, Nr. 9, September 1980 (Palo-Alto, California, US), A.F. Gort: "A fully integrated, microprocessor-controlled total station", Seiten 3-11 bekannt.

Satelliten-Positionsmeß-Systeme ermöglichen eine dreidimensionale differentielle Positionsbestimmung mit geodätischer Genauigkeit. Voraussetzung ist der Einsatz einer auf das System abgestimmten fixen Empfangsstation und einer oder mehrerer Mobilgeräte. Es ist eine Eigenheit solcher Systeme, daß die Positionsbestimmung in relativ kurzen Zeitspannen, z.B. in einigen Sekunden, vorgenommen werden kann, wodurh sich auch Positionsänderungen schnell bestimmen lassen ("KPGPS"-Methode = kinematisch differentielles Positionieren mit Global-Positions-System).

Der dabei verwendete Empfänger ist direkt mit einer Antenne ausgerüstet, deren Position sich mit Hilfe des Systems bestimmen lässt. Wegen der quasi-optischen Ausbreitungseigenschaften des für das Uebertragungssystem gewählten Wellenbereichs ist ein brauchbarer Empfang der Satellitensignale nur sichergestellt, wenn die Empfängerantenne während des Messvorgangs im direkten Sichtbereich der Satelliten liegt. Bei mobilen Empfängern kann der Empfang insbesondere durch topographische Hindernisse, Pflanzenbewuchs, Bauten etc. zeitweise oder permanent unterbrochen sein, wodurch sich Messfehler ergeben können oder eine Messung unmöglich wird.

Es ist Aufgabe dieser Erfindung, auch die Vermessung von Punkten mit Hilfe eines Satelliten-Systems zu ermöglichen, die nicht immer oder nicht sicher im direkten Empfangsbereich des Satellitensystems liegen. Ferner soll die Redundanz der ermittelten Messdaten erhöht werden, so dass sich zuverlässige Messresultate, z.B. für die amtliche Vermessung, ergeben.

Diese Aufgabe wird erfindungsgemäss durch die in Patentanspruch 1 definierten Merkmale gelöst.

Durch die dort definierten Massnahmen wird es möglich, durch einen äusserst flexiblen Einsatz der Systemkomponenten auch solche Punkte koordinatenmässig zu bestimmen, welche unter Einsatz von Satelliten-Positionsmess-Systemen sonst nicht oder nur unsicher hätten vermessen werden können. Dabei wird die Zuverlässigkeit der Messresultate durch die Kombinationsmöglichkeit mit konventionellen Vermessungsmethoden wesentlich erhöht. Andererseits ergeben sich unter Einbezug von Eigenheiten des Satelliten-Positionsmess-Systems höhere Genauigkeiten für die abgeleiteten Messresultate.

Einzelheiten der Erfindung werden im folgenden anhand von Ausführungsbeispielen mit Hilfe der Zeichnungen näher erläutert. Die Figuren zeigen in schematischer Darstellung:

Fig.1 das Beispiel eines Vermessungsgerätes, bestehend aus einer Totalstation und einem aufsetzbaren Satelliten-Empfänger für ein Satelliten-Positionsmess-System,

Fig.2 Einsatz einer Totalstation mit aufgesetztem Satelliten-Empfänger zur eigenen Positionbestimmung und einer weiteren mobilen Satelliten-Empfangsstation,

Fig.3 das Beispiel einer Feldmessung mit einer Totalstation, ohne Satelliten-Empfänger, und zusätzlich zwei mobilen Satelliten-Empfangsstationen, bei autonomer Positionsbestimmung und Datenübertragung an die zentrale Datenerfassungsstation, und

Fig.4 das Blockdiagramm mit den Datenverbindungen innerhalb des Vermessungssystems.

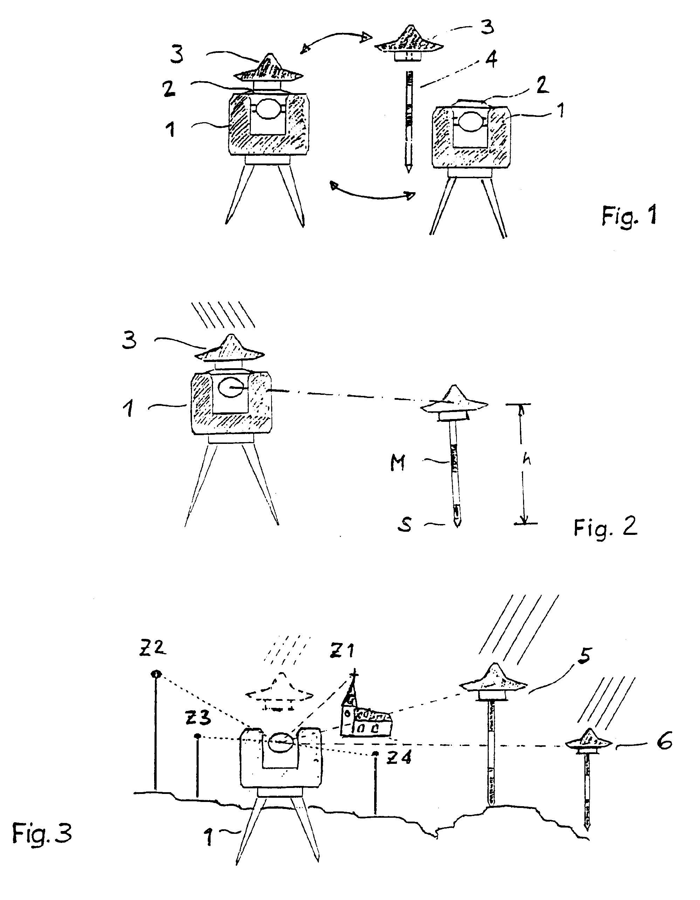

Fig.1 stellt eine Totalstation 1 zur kombinierten Winkel- und Distanzmessung dar, die mit einer Zwangszentrierung 2 zur Aufnahme eines Satelliten-Positionsmess-Empfängers 3 versehen ist. Der auf das Satelliten-Positionsmess-System eingerichtete Empfänger 3 ist mit einer entsprechenden Antenne versehen. Zum Beispiel ist der Empfänger für den Empfang des Global-Positioning-System (GPS) ausgelegt.

Bei aufgesetztem Empfänger 3 lässt sich die Position der Totalstation mit Hilfe des Satellitensystem bestimmen. Wie in Fig.1 durch entsprechende Pfeile angedeutet, lässt sich der Empfängermodul 3 auch von der Totalstation 1 abnehmen und auf einen Lotstab 4 aufsetzen. Der Empfänger 3 kann dann einerseits in Verbindung mit dem Lotstab 4 zur autonomen Positionsbestimmung über Satellitensystem eingesetzt werden; andererseits kann von der Totalstation 1 aus die Position des Lotstabs 4 konventionell vermessen werden, wie dies in Fig. 2 skizziert ist.

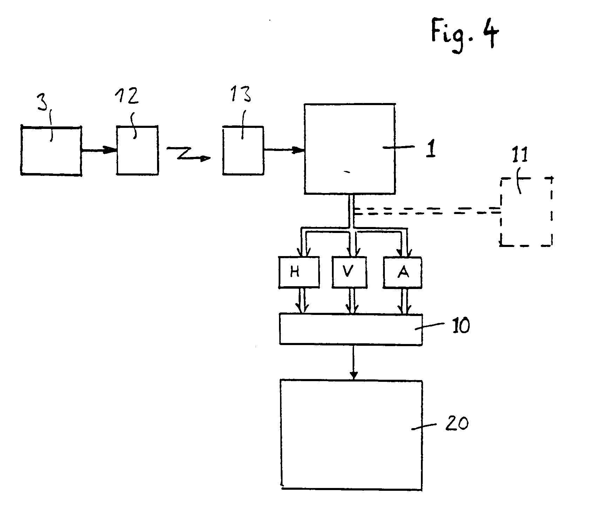

Wird für den Empfänger 3 auf dem Lotstab 4 die autonome Betriebsart mit Satelliten-Messungen gewählt, tritt eine drahtlose Datenübertragungseinrichtung 12, 13 gemäss Fig.4 vom Empfänger 3 zur Totalstation 1 in Funktion. Ihre Aufgabe wird zusammen mit der Erläuterung der Datenverbindungen an späterer Stelle erklärt.

Der Lotstab 4 ist z.B. teleskopartig ausziehbar. An seinem unteren Ende weist er eine übliche Lotstabspitze S auf. Er ist schliesslich mit einer Masseinrichtung M versehen, die eine Bestimmung des Abstandes h zwischen der Lotstabspitze S und dem Antennenzentrum A gemäss Fig.2 erlaubt.

Parallel oder ergänzend zur Positionsbestimmung mit Hilfe des Satelliten-Positionsmess-Systems lässt sich die jeweilige Position der Totalstation 1 auch im terrestrischen Koordinatensystem mit konventionellen Messmethoden, wie z.B. freie Stationierung, bestimmen. Fig. 3 zeigt als Beispiel den Einsatz einer Totalstation 1 zusammen mit zwei kompletten Satelliten-Empfangsstationen 5 und 6 in kinematisch differentieller Arbeitsweise. Unter der Annahme, dass die Position der Totalstation 1 entweder durch Aufsetzen eines Satelliten-Empfängers gemessen oder durch Rückwärtseinschneiden aus den Positionen der beiden Satelliten-Empfangsstationen 5 und 6 berechnet wurde, lassen sich die Zielpunkte Z1, Z2, Z3 und Z4 durch konventionelle Vermessungsmethoden aus der Position der Totalstation 1 heraus bestimmen. Die Genauigkeit der konventionell aufgrund von Bezugspositionen aus dem Satelliten-Positions-System ermittelten Positionen der Zielpunkte wird dabei gegenüber rein konventionell ermittelten Messresultaten erheblich verbessert. Durch Mehrfachmessungen oder Kombinationsmessungen lässt sich die Redundanz der Messresultate und damit die Sicherheit der Messungen signifikant erhöhen.

Zum Vergleich der Koordinaten aus dem Satellitensystem mit denjenigen der konventionellen terrestrischen Messung, z.B. aus der Landestopographie, ist eine Koordinatentransformation erforderlich. Diese Transformation wird in einem Rechner 20 gemäss Fig.4 vorgenommen, der über eine Datenschnittstelle 10 entweder direkt mit der Totalstation 1 verbunden ist oder an einer zentralen Datenerfassungsstelle angeordnet ist, wobei die Messdaten am Ort der Totalstation in einem Speicher 11 zwischengespeichert werden. Uebertragen werden von der Totalstation Werte S für die gemessene Horizontaldistanz, Werte V für die Vertikalrichtung und die Horizontalrichtung Hz.

Dadurch wird es möglich, Transformationsparameter zu bestimmen, welche die geometrische Beziehung zwischen den Koordinaten des Satelliten-Positions-systems und dem lokalen terrestrischen Koordinatensystem eindeutig beschreiben.

Die Kombination einer Totalstation mit dem Satelliten-Navigations-System ermöglicht zudem eine gegenseitige Kontrolle der Messungen, indem identische Punkte mit beiden Messverfahren bestimmt werden. Totalstation und Satelliten-Einheiten können jedoch auch völlig unabhängig voneinander Detailpunkte vermessen.

Ein zusätzlicher Vorteil der beschriebenen Gerätekombination besteht darin, dass sich bei Störungen der mobilen Satelliten-Empfangs-Systeme die Positionen der Antennen mit terrestrischen Messmethoden über die Totalstation 1 neu bestimmen lassen.

Aus Fig.4 ist ferner die zuvor erwähnte drahtlose Datenverbindung zwischen dem Empfänger 3 einer Messstation und der Totalstation 1 zu erkennen. Die von der Messstation 3 erfassten Positionsdaten werden einem Sender 12 zugeleitet und an der Totalstation 1 von einem Empfänger aufgenommen und an den Speicher 11 bzw. an den Computer 20 weitergeleitet. Als Datenverbindung eignet sich z.B. ein Infrarotsystem. Aus den empfangenen Positionsdaten können in der Totalstation 1 Koordinaten abgeleitet werden. Diese Datenverarbeitung vor Ort unterstützt eine Konsistenzprüfung der gemessenen Werte.

Die direkte Datenübertragung von einer Messstation zur Totalstation trägt wesentlich zur schnellen und sicheren Messwerterfassung bei. Diese Vorteile machen sich ganz besonders bemerkbar, wenn der Computer z.B. bei umfangreicheren Feldmessungen direkt mit der Totalstation verbunden ist.

## Patentansprüche

1. Terrestrisches Vermessungssystem mit einer elektrooptischen Totalstation (1) zur kombinierten Winkel- und Distanzmessung und einer Datenübertragungsschnittstelle (10) an der Totalstation, welche zu Datenspeicher- bzw. Datenverarbeitungseinrichtungen führt, dadurch gekennzeichnet, dass die Totalstation (1) und mindestens eine örtlich von der Totalstation getrennte und mit einem Empfänger (3) für ein Satelliten-Positionsmess-System ausgerüstete mobile Positions-Messeinheit (5) durch eine drahtlose Datenübermittlungseinrichtung (12, 13) miteinander verbunden sind.

2. Vermessungssystem nach Anspruch 1, dadurch gekennzeichnet, dass die Totalstation (1) und der Empfänger (3) mit aufeinander abgestimmten Zwangszentrierungen (2) versehen sind, womit sich die beiden Geräteteile (1, 3) entkoppelbar und bezüglich ihrer geometrischen Relativposition eindeutig miteinander verbinden lassen.

3. Vermessungssystem nach Anspruch 1, dadurch gekennzeichnet, dass an die Totalstation (1) Datenverarbeitungseinrichtungen (20) zur Koordinatenbestimmung, zur Koordinatentransformation vom Satelliten-Positionsmess-System auf das terrestrische Koordinatensystem der Totalstation (1) und zur Konsistenzprüfung der ermittelten Daten angeschlossen sind.

4. Vermessungssystem nach Anspruch 1, dadurch gekennzeichnet, dass der Empfänger (3) geometrisch eindeutig auf einem Lotstab (4) abnehmbar montiert ist.

## Claims

1. Terrestial surveying system with an electro-optical total station (1) for the combined measurement of angle and distance and a data transmission interface (10), which leads to data storage equipments or data processing equipments, at the total station, characterised thereby, that the total station (1) and at least one mobile position-measuring unit (5), which is separated in location from the total station and equipped with a receiver (3) for a satellite position-measuring system, are one connected with the other by a wireless data transmission equipment (12, 13).

2. Surveying system according to claim 1, characterised thereby, that the total station (1) and the receiver (3) are provided with constrained centrings (2), which are each tuned to the other, whereby both the apparatus parts (1, 3) are uncouplable and let themselves be connected each with the other unambiguously in respect of their relative geometric position.

3. Surveying system according to claim 1, characterised thereby, that data processing equipments (20) for the ascertaining of coordinates, for the transformation of co-ordinates from the satellite position-measuring system to the terrestial co-ordinate system of the total station (1) and for the consistency-testing of the ascertained data are connected to the total station (1).

4. Surveying system according to claim 1, characterised thereby, that the receiver (3) is removably mounted on a plumb rod (4) in geometrically unambiguous manner.

## Revendications

1- Système géodésique terrestre avec une station électrooptique totale 1 destinée à la mesure combinée d'angles et de distances et un interface de transmissions des données 10 à la station totale qui conduit à des installations de mise en mémoire de données ou de traitements de données, caractérisé en ce que la station totale (1) et au moins une unité de mesure de positionnement mobile (5) séparée, en ce qui concerne son emplacement, de la station totale et équipée d'un récepteur (3) d'un système de mesure de position de satellite sont reliées entre elles par l'intermédiaire d'une installation de transmission de données (12, 13) sans fil.

2- Système géodésique selon la revendication 1, caractérisé en ce que la station totale (1) et le récepteur (3) sont pourvus de dispositifs de centrages forcés (2) accordés l'un à l'autre permettant de relier entre elles les deux parties d'appareil (1, 3) sans ambiguïté en ce qui concerne leurs positions relatives géométriques et de façon à pouvoir !es désolidariser.

3- Système géodésique selon la revendication 1, caractérisé en ce que des installations de traitement des données (20) pour la détermination des coordonnées, pour la transformation des coordonnées du système de mesure de position de satellites au système de coordonnées terrestres de la station totale (1) et pour la vérification de la consistance des données obtenues sont reliées à la station totale (1).

4- Système géodésique selon la revendication 1, caractérisé en ce que le récepteur (3) est monté de façon amovible, géométriquement sans ambiguïté, sur une tige verticale (4).

Fig. 1

Fig. 2

Fig. 3

Fig. 4